(19) Europäisches Patentamt
European Patent Office
Office européen des brevets

(11) **EP 3 483 210 A1**

(12) **EUROPEAN PATENT APPLICATION**
published in accordance with Art. 153(4) EPC

(43) Date of publication:
**15.05.2019 Bulletin 2019/20**

(51) Int Cl.:
*C08L 9/00* (2006.01)          *B65G 15/32* (2006.01)
*C08K 3/04* (2006.01)          *C08L 7/00* (2006.01)

(21) Application number: **17827455.1**

(22) Date of filing: **30.06.2017**

(86) International application number:
**PCT/JP2017/024178**

(87) International publication number:
**WO 2018/012325 (18.01.2018 Gazette 2018/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **11.07.2016 JP 2016136978**

(71) Applicant: **Bridgestone Corporation
Tokyo 104-8340 (JP)**

(72) Inventor: **ISHIKAWA, Tetsuya
Tokyo 104-8340 (JP)**

(74) Representative: **Oxley, Robin John George
Marks & Clerk LLP
15 Fetter Lane
London EC4A 1BW (GB)**

(54) **RUBBER COMPOSITION, CONVEYOR BELT, AND BELT CONVEYOR**

(57) To provide a rubber composition that achieves both the energy saving capability and the rolling dimensional stability, to provide a conveyor belt that achieves both the energy saving capability and the rolling dimensional stability, and to provide a belt conveyor having the conveyor belt mounted thereto. A rubber composition containing: a diene polymer (A), and carbon black (B) containing carbon black (b-1) having a nitrogen adsorption specific surface area of more than 100 $m^2/g$ and a dibutyl phthalate oil absorption of 100 to 140 mL/100 g, and carbon black (b-2) having a nitrogen adsorption specific surface area of less than 60 $m^2/g$ and a dibutyl phthalate oil absorption of 110 mL/100 g or more, a total content of the carbon black (b-1) and the carbon black (b-2) being from 25 to 55 parts by mass per 100 parts by mass of the diene polymer (A).

**EP 3 483 210 A1**

**Description**

Technical Field

The present invention relates to a rubber composition, a conveyor belt obtained by using the rubber composition, and a belt conveyor having the conveyor belt mounted thereto.

Background Art

A belt conveyor is being used as a means for conveying various packages, such as materials and foods. Associated with the increase of the transportation amount and the enhancement of the transportation efficiency in recent years, a large-sized belt conveyor is being used, and one having an overall length reaching several kilometers is coming to use. Accordingly, higher durability is demanded, and simultaneously reduction of the electric power consumption is also demanded.

The belt (conveyor belt) to be mounted to the belt conveyor generally has a core as a reinforcing member inside, and the core is held between cover rubber (which is hereinafter referred to as "outer cover rubber") on the upper side of the core (to be the outer periphery when used as a conveyor belt) and cover rubber (which is hereinafter referred to as "inner cover rubber") on the inner periphery (to be the back side or the lower side when used as a conveyor belt). The outer cover rubber and the inner cover rubber positioned on the back side thereof are different from each other in the demanded properties, and the inner cover rubber not only necessarily has tear resistance, but also necessarily reduces the energy loss due to the contact between the conveyor belt and a large number or rollers, i.e., necessarily reduces the electric power consumption by low hysteresis loss.

PTL 1 describes, as a rubber composition for a conveyor belt that achieves both the energy saving capability and the durability, a rubber composition for a conveyor belt, containing (A) 100 parts by mass of a dienic polymer, and (B) from 25 to 55 parts by mass of carbon black containing carbon black (b-1) having a nitrogen adsorption specific surface area of 60 to 100 $m^2$/g and a dibutyl phthalate oil absorption of less than 110 ml/100 g, and carbon black (b-2) having a nitrogen adsorption specific surface area of less than 60 $m^2$/g and a dibutyl phthalate oil absorption of 110 ml/100 g or more.

PTL 2 describes, as a rubber composition that is excellent in electric power saving and flexural fatigue resistance, a rubber composition containing diene rubber containing natural rubber and butadiene rubber, and carbon black 1 and carbon black 2, in which the amount of the natural rubber is from 40 to 90% by mass in the diene rubber, the amount of the butadiene rubber is from 60 to 10% by mass in the diene rubber, the carbon black 1 has a nitrogen adsorption specific surface area of 60 to 100 $m^2$/g, the carbon black 1 has a dibutyl phthalate oil absorption of 120 $cm^3$/100 g or less, the carbon black 2 has a nitrogen adsorption specific surface area of 20 to 40 $m^2$/g, the carbon black 2 has a dibutyl phthalate oil absorption of 70 to 95 $cm^3$/100 g or less, and the total amount of the carbon black 1 and the carbon black 2 is from 25 to 50 parts by mass per 100 parts by mass of the diene rubber.

Citation List

Patent Literatures

PTL 1: JP 2013-122018 A
PTL 2: WO 2005/182499

Summary of Invention

Technical Problem

The rubber compositions described in PTLs 1 and 2 are excellent particularly in durability, but are insufficient in dimensional stability in molding a conveyor belt by rolling (which may be hereinafter referred to as "rolling dimensional stability") in consideration of the high required quality in recent years.

Under the circumstances, an object of the present invention is to provide a rubber composition that achieves both the energy saving capability and the rolling dimensional stability, to provide a conveyor belt that achieves both the energy saving capability and the rolling dimensional stability, and to provide a belt conveyor having the conveyor belt mounted thereto.

Solution to Problem

As a result of the earnest investigations made by the present inventors for solving the problems, it has been found that the problems can be solved by a rubber composition that contains a diene polymer and two kinds of particular carbon black in a particular ratio. The present invention has been completed based on the knowledge.

The present invention relates to the following items [1] to [10].

[1] A rubber composition containing: a diene polymer (A), and carbon black (B) containing carbon black (b-1) having a nitrogen adsorption specific surface area of more than 100 $m^2$/g and a dibutyl phthalate oil absorption of 100 to 140 mL/100 g; and carbon black (b-2) having a nitrogen adsorption specific surface area of less than 60 $m^2$/g and a dibutyl phthalate oil absorption of 110 mL/100 g or more, a total content of the carbon black (b-1) and the carbon black (b-2) being from 25 to 55 parts by mass per 100 parts by mass of the diene polymer (A).

[2] The rubber composition according to the item [1], wherein the carbon black (b-1) has a nitrogen adsorption specific surface area of more than 100 $m^2$/g and 116 $m^2$/g or less (and preferably from 106 to 116 $m^2$/g).

[3] The rubber composition according to the item [1] or [2], wherein the carbon black (b-1) has a dibutyl phthalate oil absorption of 100 to 119 mL/100 g (and preferably from 109 to 119 mL/100 g).

[4] The rubber composition according to any one of the items [1] to [3], wherein the carbon black (b-2) has a nitrogen adsorption specific surface area of 30 $m^2$/g or more and less than 60 $m^2$/g (and preferably from 35 to 45 $m^2$/g).

[5] The rubber composition according to any one of the items [1] to [4], wherein the carbon black (b-2) has a dibutyl phthalate oil absorption of 110 to 140 mL/100 g (and preferably from 116 to 126 mL/100 g).

[6] The rubber composition according to any one of the items [1] to [5], wherein a content ratio (b-1)/(b-2) (mass ratio) of the carbon black (b-1) and the carbon black (b-2) is from 10/90 to 80/20 (preferably from 20/80 to 60/40, and more preferably from 30/70 to 50/50).

[7] The rubber composition according to any one of the items [1] to [6], wherein the diene polymer (A) contains natural rubber and isoprene rubber in a total amount of 15 to 85% by mass (preferably from 20 to 60% by mass, and more preferably from 25 to 55% by mass) and butadiene rubber in an amount of 85 to 15% by mass (preferably from 80 to 40% by mass, and more preferably from 75 to 45% by mass).

[8] A conveyor belt, which is obtained by using the rubber composition according to any one of the items [1] to [7].

[9] A belt conveyor including the conveyor belt according to the item [8] mounted thereto.

[10] Use of the rubber composition according to any one of the items [1] to [7] as a conveyor belt.

Advantageous Effects of Invention

According to the present invention, a rubber composition that achieves both the energy saving capability and the rolling dimensional stability, a conveyor belt that achieves both the energy saving capability and the rolling dimensional stability, and a belt conveyor having the conveyor belt mounted thereto can be provided.

Description of Embodiments

[Rubber Composition]

The rubber composition of the present invention contains:

a diene polymer (A), and

carbon black (B) containing carbon black (b-1) having a nitrogen adsorption specific surface area of more than 100 $m^2$/g and a dibutyl phthalate oil absorption of 100 to 140 mL/100 g; and carbon black (b-2) having a nitrogen adsorption specific surface area of less than 60 $m^2$/g and a dibutyl phthalate oil absorption of 110 mL/100 g or more, and

the total content of the carbon black (b-1) and the carbon black (b-2) is from 25 to 55 parts by mass per 100 parts by mass of the diene polymer (A).

The rubber composition of the present invention is preferred as a rubber composition for a conveyor belt, and a conveyor belt obtained by using the rubber composition can achieve both the energy saving capability and the rolling dimensional stability.

In the following description, the expression "from A to B" showing a range means a numerical range including the end points A and B. In other words, the expression means "A or more and B or less" (in the case of A < B) or "A or less and B or more" (in the case of A > B).

The rubber composition of the present invention will be described below with reference, for example, to the case where the rubber composition is applied to a conveyor belt.

The components of the rubber composition of the present invention will be also described below.

(Diene Polymer (A))

The rubber composition of the present invention contains a diene polymer (A) (which may be hereinafter referred to as a "component (A)").

Examples of the diene polymer as the component (A) include natural rubber (NR), isoprene rubber (IR), butadiene rubber (BR), styrene-butadiene rubber (SBR), ethylene-propylene rubber (EPR), ethylene-propylene-diene rubber (EPDM), butyl rubber (IIR), halogenated butyl rubber, and chloroprene rubber. These kinds of rubber may be used alone or as a combination of two or more kinds thereof. In the present invention, from the standpoint of the achievement of both the energy saving capability and the durability, it is preferred to use two or more kinds thereof in combination. It is more preferred to use at least two kinds selected from natural rubber, isoprene rubber, and butadiene rubber in combination. It is further preferred to use at least one selected from natural rubber and butadiene rubber, and butadiene rubber in combination. It is particularly preferred to use natural rubber or isoprene rubber, and butadiene rubber in combination.

The component (A) is preferably composed only of at least one selected from natural rubber and butadiene rubber, and butadiene rubber, and more preferably composed only of natural rubber or butadiene rubber, and butadiene rubber.

From the standpoint of the achievement of both the energy saving capability and the durability, the component (A) preferably contains from 15 to 85% by mass in total of natural rubber and isoprene rubber and from 85 to 15% by mass of butadiene rubber. More preferably, the component (A) contains from 20 to 60% by mass in total of natural rubber and isoprene rubber and from 80 to 40% by mass of butadiene rubber. Further preferably, the component (A) contains from 25 to 55% by mass in total of natural rubber and isoprene rubber and from 75 to 45% by mass of butadiene rubber Particularly preferably, the component (A) contains from 30 to 45% by mass in total of natural rubber and isoprene rubber and from 70 to 55% by mass of butadiene rubber.

In the case where the total content of natural rubber and isoprene rubber in the component (A) is 15% or more by mass, the natural rubber and isoprene rubber form the sea of the sea-island structure of the component (A), resulting in good fracture characteristics. In the case where the content of butadiene rubber in the component (A) is at least 15% by mass, the energy saving capability can be enhanced.

The butadiene rubber is preferably high-cis butadiene rubber from the standpoint of the achievement of both the energy saving capability and the durability. The high-cis butadiene rubber herein means high-cis butadiene rubber that has a cis-1,4 bond content in the 1,3-butadiene units therein of 90% or more and less than 98% in the measurement by FT-IR. The cis-1,4 bond content in the 1,3-butadiene units in the high-cis butadiene rubber is preferably 95% or more and less than 98%. The production method of the high-cis butadiene rubber is not particularly limited, and the rubber may be produced by a known method. For example, the rubber may be produced through polymerization of butadiene by using a neodymium catalyst. The high-cis butadiene rubber is commercially available, and for example, "BR01", "T700", and the like, produced by JSR Corporation, may be used.

(Carbon Black (B))

The rubber composition of the present invention contains carbon black (B) (which may be hereinafter referred to as a "component (B)").

From the standpoint of the achievement of both the energy saving capability and the rolling dimensional stability, the carbon black as the component (B) contains carbon black (b-1) (which may be hereinafter referred to as a "component (b-1)") having a nitrogen adsorption specific surface area of more than 100 $m^2$/g and a dibutyl phthalate oil absorption of 100 to 140 mL/100 g, and carbon black (b-2) (which may be hereinafter referred to as a "component (b-2)") having a nitrogen adsorption specific surface area of less than 60 $m^2$/g and a dibutyl phthalate oil absorption of 110 mL/100 g or more.

The dibutyl phthalate oil absorption may be hereinafter referred to as a "DBP oil absorption".

From the standpoint of the rolling dimensional stability, the carbon black as the component (b-1) in the present invention satisfies the two conditions, i.e., a nitrogen adsorption specific surface area of more than 100 $m^2$/g and a DBP oil absorption of 100 to 140 mL/100 g. From the standpoint of the rolling dimensional stability, furthermore, the carbon black as the component (b-1) in the present invention preferably has a nitrogen adsorption specific surface area of more than 100 $m^2$/g and 116 $m^2$/g or less and a DBP oil absorption of 100 to 119 mL/100 g, and more preferably has a nitrogen adsorption specific surface area of 106 to 116 $m^2$/g and a DBP oil absorption of 109 to 119 mL/100 g.

It is estimated that the component (b-1) particularly has a large surface area with respect to the particle diameter and thus readily undergoes interaction with the rubber component in vulcanization, as compared to carbon black having a small surface area with respect to the particle diameter, and consequently the dimensional stability in molding by rolling can be obtained.

From the standpoint of the energy saving capability, the carbon black as the component (b-2) in the present invention satisfies the two conditions, i.e., a nitrogen adsorption specific surface area of less than 60 $m^2/g$ and a DBP oil absorption of 110 mL/100 g or more. The carbon black as the component (b-2) in the present invention preferably has a nitrogen adsorption specific surface area of 30 $m^2/g$ or more and less than 60 $m^2/g$ and a DBP oil absorption of 110 to 140 mL/100 g, and more preferably has a nitrogen adsorption specific surface area of 35 to 45 $m^2/g$ and a DBP oil absorption of 116 to 126 mL/100 g.

In the description herein, the nitrogen adsorption specific surface area and the DBP oil absorption of the carbon black are values that are measured according to JIS K6217 (1997).

The content ratio of the component (b-1) and the component (b-2) in terms of mass ratio ((b-1)/(b-2)) is preferably from 10/90 to 80/20, more preferably from 20/80 to 60/40, and further preferably from 30/70 to 50/50. In the case where the content ratio of the component (b-1) with respect to the total of the component (b-1) and the component (b-2) is less than 10% by mass, the rolling dimensional stability may be deteriorated, and in the case where the content ratio of the component (b-2) is less than 20% by mass, the energy saving capability may be insufficient.

The carbon black may be produced by any method of a furnace method, a channel method, an acetylene method, a thermal method, and the like, and carbon black produced by a furnace method is particularly preferred. Specific examples of the carbon black include the standard species including SAF, ISAF, HAF, FEF, GPF, and SRF (all of which are furnace black for rubber), and MT carbon black (pyrolytic carbon). Among these, ISAF, SAF, and FEF are preferred. The carbon black that satisfies the aforementioned requirements may be appropriately selected from these species and used.

In the rubber composition of the present invention, the total content of the component (b-1) and the component (b-2) is from 25 to 55 parts by mass per 100 parts by mass of the component (A). With the total content of less than 25 parts by mass, the durability becomes poor. With the total content exceeding 55 parts by mass, on the other hand, the durability becomes poor, and the energy saving capability is insufficient. From the same standpoint, the total content of the component (b-1) and the component (b-2) is preferably from 25 to 50 parts by mass, more preferably from 30 to 50 parts by mass, and further preferably from 35 to 50 parts by mass, per 100 parts by mass of the component (A).

The rubber composition of the present invention may contain carbon black (b-3) (which may be hereinafter referred to as a "component (b-3)") that does not correspond to the component (b-1) and the component (b-2). In the case where the component (b-3) is contained, the content thereof is preferably 10 parts by mass or less, more preferably 5 parts by mass or less, further preferably 3 parts by mass or less, and particularly preferably 1 part by mass or less, per 100 parts by mass of the component (A), and it is most preferred that the component (b-3) is not contained.

The content of the component (b-3) in the component (B) is preferably 30% by mass or less, more preferably 15% by mass or less, and further preferably 5% by mass or less, and it is most preferred that the component (b-3) is not contained.

(Additional Components)

An additional additive may be further added to the rubber composition of the present invention in such a range that does not significantly impair the effects of the present invention. The additives are not particularly limited, as far as the additives are generally contained in cover rubber of a conveyor belt. Examples of the additives include a fatty acid such as stearic acid, zinc oxide (zinc flower), an antiaging agent, sulfur, a vulcanization accelerator, a vulcanization retardant (scorching inhibitor), an oil, a resin, wax, silica, a silica coupling agent, a peptizing agent, an ozone cracking inhibitor, an antioxidant, clay, and calcium carbonate. These materials used may be commercial products.

In the case where a fatty acid is used, the amount thereof is preferably from 0.1 to 10 parts by mass, and more preferably from 1 to 5 parts by mass, per 100 parts by mass of the component (A).

In the case where zinc oxide is used, the amount thereof is preferably from 0.5 to 10 parts by mass, and more preferably from 1 to 5 parts by mass, per 100 parts by mass of the component (A).

As the antiaging agent, a known antiaging agent may be selected and used. Examples thereof include N-phenyl-N'-(1,3-dimethylbutyl)-p-phenylenediamine (6C), N-phenyl-N'-isopropyl-p-phenylenediamine (3C), and 2,2,4-trimethyl-1,2-dihydroquinoline polymer (RD). The antiaging agent may be used alone or as a combination of two or more kinds thereof. In case where antiaging agent is used, the amount thereof is preferably from 0.1 to 10 parts by mass, more preferably from 0.5 to 5 parts by mass, and further preferably from 1 to 5 parts by mass, per 100 parts by mass of the component (A).

In the case where sulfur is used, the amount thereof is preferably from 0.5 to 10 parts by mass, and more preferably from 0.5 to 4 parts by mass, in terms of sulfur content per 100 parts by mass of the component (A).

The vulcanization accelerator is not particularly limited, and examples thereof include a thiazole series, such as 2-mercaptobenzothiazole (M), dibenzothiazyl disulfide (DM), and N-cyclohexyl-2-benzothiazylsulfenamide (CZ), and a guanidine series, such as diphenylguanidine (DPG). The vulcanization accelerator may be used alone or as a combination of two or more kinds thereof. In case where a vulcanization accelerator is used, the amount thereof is preferably from 0.1 to 5 parts by mass, and more preferably from 0.1 to 2 parts by mass, per 100 parts by mass of the component (A).

The amounts of the other additional additives may be appropriately selected by one skilled in the art in such a range that does not impair the objects of the present invention.

The rubber composition of the present invention may be obtained by kneading the component (A) and the component (B) along with appropriately necessary additives. The kneading method may be in accordance with a method that is ordinarily performed by one skilled in the art. Preferred examples of the method include a method, in which all the components except for sulfur and a vulcanization accelerator are kneaded by using a mixing machine, such as a Banbury mixer, a Brabender mixer, a kneader, or a high-shear mixer, at from 80 to 200°C (preferably from 100 to 180°C) (A-stage kneading), and then sulfur and a vulcanization accelerator are added thereto and further kneaded with a kneading roll machine or the like at from 80 to 200°C (preferably from 100 to 180°C) (B-stage kneading), and a method, in which all the components are kneaded at one time by using the aforementioned kneader at from 80 to 200°C (preferably from 100 to 180°C).

The rubber composition thus obtained may be molded with a heating mold to provide a conveyor belt (i.e., outer cover rubber and inner cover rubber). In general, outer cover rubber and inner cover rubber are made to hold a core as a reinforcing member to make a conveyor belt, which is mounted to a belt conveyor.

The rubber composition for a conveyor belt of the present invention has both the energy saving capability and the rolling dimensional stability, and thus is useful particularly as inner cover rubber of a conveyor belt.

Examples

The present invention will be described in more detail with reference to examples below, but the present invention is not limited to the examples. In the description below, the expressions "%" and "part" mean "% by mass" and "part by mass" respectively unless otherwise indicated. The expressions for the added amounts in the table are all in "part by mass".

The rubber compositions for a conveyor belt obtained in the examples in Table 1 were evaluated for the rolling dimensional stability and the energy saving capability according to the following manners.

(Dimensional Stability Rate of Rubber)

The rubber compositions obtained in the examples in Table 1 each were rolled into a sheet by using a mill roll. The length of the long side of the rubber sheet wrapping around the roll during rolling and the length of the long side of the rubber sheet after mill shrinkage after cutting from the roll each were measured. The dimensional stability rate of the rubber sheet on the long side was obtained according to the following expression. A larger value for the dimensional stability rate means better rolling dimensional stability.

$$\text{Dimensional stability rate of rubber } (\%) = ((\text{length of long side after rolling})/(\text{length of long side during rolling})) \times 100$$

(Energy Saving Capability - Low Hysteresis Loss)

Sheets having a length of 40 mm, a width of 5 mm, and a thickness of 2 mm were produced with the rubber compositions for a conveyor belt obtained in the examples in Table 1. The sheets each were subjected to dynamic viscoelasticity measurement with a viscoelasticity spectrometer (produced by Toyo Seiki Seisakusho Co., Ltd.) under measurement conditions of a chuck distance of 10 mm, a dynamic strain of 2%, and a frequency of 10 Hz, so as to measure the loss tangent (tan$\delta$) at 20°C. Assuming that the dynamic elastic modulus was referred to as E' (N/mm), the value of tan$\delta$/E'$^{0.32}$ (loss index) was obtained and designated as the index of the low hysteresis loss. A smaller loss index means being excellent in low hysteresis loss, indicating excellent energy saving capability.

Examples 1 to 9 and Comparative Examples 1 to 4

All the components except for sulfur and the vulcanization accelerator were kneaded at the mixing ratio (unit: part by mass) shown in Table 1 by using a Banbury mixer (A-stage kneading), and then sulfur and the vulcanization accelerator were added thereto and further kneaded (B-stage kneading) to provide a rubber composition for a conveyor belt. The rubber composition was vulcanized at a mold temperature of 160°C for 15 minutes to provide cover rubber for a conveyor belt. The resulting cover rubber was evaluated for the durability and the energy saving capability. The results are shown in Table 1.

Table 1

| Component | | | Example | | | | | | | | | Comparative Example | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| Component | (A) | NR[1] | 60 | 60 | 60 | 30 | 30 | 30 | 60 | 20 | 80 | 60 | 60 | 60 | 60 |
| | | BR[2] | 40 | 40 | 40 | 70 | 70 | 70 | 40 | 80 | 20 | 40 | 40 | 40 | 40 |
| | (B) | Carbon black 1[3] | 4 (10%) | 10 (25%) | 16 (40%) | 4 (10%) | 16 (40%) | 0 | 30 (75%) | 16 (40%) | 16 (40%) | 16 (40%) | 0 | 40 (100%) | 0 |
| | | Carbon black 2[4] | 0 | 0 | 0 | 0 | 0 | 16 (40%) | 0 | 0 | 0 | 0 | 0 | 0 | 0 |
| | | Carbon black 3[5] | 36 (90%) | 30 (75%) | 24 (60%) | 36 (90%) | 24 (60%) | 24 (60%) | 10 (25%) | 24 (60%) | 24 (60%) | 0 | 24 (60%) | 0 | 40 (100%) |
| | | Carbon black 4[6] | 0 | 0 | 0 | 0 | 0 | 0 | 0 | 0 | 0 | 24 (60%) | 16 (40%) | 0 | 0 |
| | Stearic acid [7] | | 3 | 3 | 3 | 3 | 3 | 3 | 3 | 3 | 3 | 3 | 3 | 3 | 3 |
| | Zinc oxide[8] | | 3.5 | 3.5 | 3.5 | 3.5 | 3.5 | 3.5 | 3.5 | 3.5 | 3.5 | 3.5 | 3.5 | 3.5 | 3.5 |
| | Antiaging agent[9] | | 3 | 3 | 3 | 3 | 3 | 3 | 3 | 3 | 3 | 3 | 3 | 3 | 3 |
| | Sulfur[10] | | 2 | 2 | 2 | 2 | 2 | 2 | 2 | 2 | 2 | 2 | 2 | 2 | 2 |
| | Bismaleimide [11] | | 0.8 | 0.8 | 0.8 | 0.8 | 0.8 | 0.8 | 0.8 | 0.8 | 0.8 | 0.8 | 0.8 | 0.8 | 0.8 |
| | Vulcanization accelerator [12] | | 0.6 | 0.6 | 0.6 | 0.6 | 0.6 | 0.6 | 0.6 | 0.6 | 0.6 | 0.6 | 0.6 | 0.6 | 0.6 |
| Evaluation | Dimensional stability of rubber (%) | | 71 | 72 | 74 | 72 | 74 | 76 | 78 | 73 | 72 | 76 | 69 | 76 | 67 |
| | Energy saving capability (loss index) | | 0.081 | 0.085 | 0.088 | 0.079 | 0.084 | 0.090 | 0.092 | 0.081 | 0.090 | 0.092 | 0.087 | 0.094 | 0.079 |

The components in Table 1 will be described in detail below.

1) Natural rubber, grade: RSS-3
2) Butadiene rubber (the amount of cis-1,4 bonds in 1,3-butadiene units is 97%), "BR150L" (trade name), produced by Ube Industries, Ltd.
3) "Shoblack N220" (trade name) (ISAF), produced by Cabot Japan K.K., nitrogen adsorption specific surface area: 111 m$^2$/g, dibutyl phthalate oil absorption: 115 mL/100 g, component (b-1)
4) "Vulcan 10H" (trade name) (SAF), produced by Cabot Japan K.K., nitrogen adsorption specific surface area: 146 m$^2$/g, dibutyl phthalate oil absorption: 127 mL/100 g, component (b-1)
5) "Shoblack N550" (trade name) (FEF), produced by Cabot Japan K.K., nitrogen adsorption specific surface area: 42 m$^2$/g, dibutyl phthalate oil absorption: 115 mL/100 g, component (b-2)
6) "Shoblack N330" (trade name) (HAF), produced by Cabot Japan K.K., nitrogen adsorption specific surface area: 82 m$^2$/g, dibutyl phthalate oil absorption: 102 mL/100 g, neither component (b-1) nor component (b-2)
7) Stearic Acid 300 (trade name), produced by New Japan Chemical Co., Ltd.
8) Zinc flower, produced by Toho Zinc Co., Ltd.
9) "Nonflex RD" (trade name), 2,2,4-trimethyl-1,2-dihydroquinoline polymer, produced by Seiko Chemical Co., Ltd.
10) "60% Insoluble Sulfur" (trade name), produced by Nippon Kanryu Industry Co., Ltd.
11) "Vulnoc PM" (trade name), m-phenylenedimaleimide (vulcanizing agent), produced by Ouchi Shinko Chemical Industrial Co., Ltd.
12) "Nocceler NS-P" (trade name), N-t-butyl-2-benzothiazolylsulfenamide, produced by Ouchi Shinko Chemical Industrial Co., Ltd.

It is understood from Table 1 that the rubber composition for a conveyor belt of the present invention achieves both the energy saving capability and the rolling dimensional stability.

In the case where only the component (b-1) is contained as the component (B) as in Comparative Examples 1 and 3, and the case where only the component (b-2) is contained as the component (B) as in Comparative Examples 2 and 4, on the other hand, the energy saving capability is insufficient.

Industrial Applicability

The rubber composition of the present invention is excellent in both the energy saving capability and the rolling dimensional stability, and thus can be applied to a conveyor belt, particularly to inner cover rubber of a conveyor belt.

## Claims

1. A rubber composition comprising:

   a diene polymer (A), and
   carbon black (B) containing carbon black (b-1) having a nitrogen adsorption specific surface area of more than 100 m$^2$/g and a dibutyl phthalate oil absorption of 100 to 140 mL/100 g; and carbon black (b-2) having a nitrogen adsorption specific surface area of less than 60 m$^2$/g and a dibutyl phthalate oil absorption of 110 mL/100 g or more,
   a total content of the carbon black (b-1) and the carbon black (b-2) being from 25 to 55 parts by mass per 100 parts by mass of the diene polymer (A).

2. The rubber composition according to claim 1, wherein the carbon black (b-1) has a nitrogen adsorption specific surface area of more than 100 m$^2$/g and 116 m$^2$/g or less.

3. The rubber composition according to claim 1 or 2, wherein the carbon black (b-1) has a dibutyl phthalate oil absorption of 100 to 119 mL/100 g.

4. The rubber composition according to any one of claims 1 to 3, wherein a content ratio (b-1)/(b-2) (mass ratio) of the carbon black (b-1) and the carbon black (b-2) is from 10/90 to 80/20.

5. The rubber composition according to any one of claims 1 to 4, wherein the diene polymer (A) contains natural rubber and isoprene rubber in a total amount of 15 to 85% by mass and butadiene rubber in an amount of 85 to 15% by mass.

**6.** A conveyor belt, which is obtained by using the rubber composition according to any one of claims 1 to 5.

**7.** A belt conveyor comprising the conveyor belt according to claim 6 mounted thereto.

**INTERNATIONAL SEARCH REPORT**

| International application No. |
| --- |
| PCT/JP2017/024178 |

**A. CLASSIFICATION OF SUBJECT MATTER**
*C08L9/00*(2006.01)i, *B65G15/32*(2006.01)i, *C08K3/04*(2006.01)i, *C08L7/00*(2006.01)i

According to International Patent Classification (IPC) or to both national classification and IPC

**B. FIELDS SEARCHED**

Minimum documentation searched (classification system followed by classification symbols)
C08L1/00-101/14, C08K3/00-13/08, B65G15/32

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2013-122018 A  (Bridgestone Corp.),<br>20 June 2013 (20.06.2013),<br>comparative example 8<br>& US 2015/0001047 A1<br>comparative example 8<br>& WO 2013/089069 A1      & EP 2792709 A1<br>& AU 2012353554 A        & CN 104114631 A | 1,3-7<br>2 |
| X<br>A | JP 2014-031248 A  (Bridgestone Corp.),<br>20 February 2014 (20.02.2014),<br>comparative example 8<br>& US 2015/0001047 A1<br>comparative example 8<br>& WO 2013/089069 A1      & EP 2792709 A1<br>& AU 2012353554 A        & CN 104114631 A | 1,3-7<br>2 |

☒ Further documents are listed in the continuation of Box C.          ☐ See patent family annex.

| | |
| --- | --- |
| \*    Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    21 August 2017 (21.08.17) | Date of mailing of the international search report<br>    29 August 2017 (29.08.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/024178

C (Continuation). DOCUMENTS CONSIDERED TO BE RELEVANT

| Category* | Citation of document, with indication, where appropriate, of the relevant passages | Relevant to claim No. |
|---|---|---|
| A | WO 2015/182499 A1 (The Yokohama Rubber Co., Ltd.), 03 December 2015 (03.12.2015), the entire description & US 2017/0197789 A1 the entire specification & JP 2015-224259 A & DE 112015002461 T & AU 2015267872 A & CN 106414582 A | 1-7 |
| A | JP 2006-183805 A (Mitsuboshi Belting Ltd.), 13 July 2006 (13.07.2006), the entire specification (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013122018 A
- WO 2005182499 A